# EUROPÄISCHE PATENTSCHRIFT

(11) **EP 1 608 480 B1**
(45) Veröffentlichungstag und Bekanntmachung des Hinweises auf die Patenterteilung: **18.11.2009**
(21) Anmeldenummer: 04722507.3
(22) Anmeldetag: 23.03.2004
(51) Int. Cl.: B23K 31/02

(54) **VERFAHREN ZUM VERSCHWEISSEN EINES ROTATIONSSYMMETRISCHEN TEILES MIT EINEM NABENTEIL**
METHOD FOR WELDING A ROTATIONALLY SYMMETRICAL PART TO A HUB PART
PROCEDE DE SOUDAGE D'UNE PIECE A SYMETRIE DE ROTATION AVEC UNE PARTIE DE MOYEU

(30) Priorität: 31.03.2003 AT 22303 U
(43) Veröffentlichungstag der Anmeldung: 28.12.2005
(73) Patentinhaber: Magna Steyr Fahrzeugtechnik AG & Co KG, 8041 Graz (AT)
(72) Erfinder: RAHM, Manfred, A-8103 Rein (AT)
(74) Vertreter: Harringer, Thomas
(86) Internationale Anmeldenummer: PCT/AT2004/000106
(87) Internationale Veröffentlichungsnummer: WO 2004/087365

(56) Entgegenhaltungen:
- EP-A- 0 763 396
- GB-A- 1 391 026
- US-A- 4 059 214
- US-A- 5 188 478
- US-A- 5 865 363
- US-B1- 6 410 165

## Beschreibung

Die Erfindung betrifft ein Verfahren zum Verbinden eines Zahnrades mit einem Nabenteil durch Schweißen, wobei die miteinander zu verbindenden Kontaktflächen im Wesentlichen zylindrisch sind und das Zahnrad Wälzflächen hat, deren genaue Lage und/oder Winkel funktionswesentlich ist. Im Wesentlichen zylindrisch bedeutet, dass die Kontaktflächen keine achsnormalen Flächen sind, sondern eine gewisse Zentrierwirkung ausüben. Der Nabenteil kann auch Teil der das Zahnrad tragenden Welle oder diese selbst sein. Bei Zahnrädern ist insbesondere an das Tellerrad eines Achsantriebes für Kraftfahrzeuge gedacht, dessen Form und Lage der Wälzflächen eine hohe Anfälligkeit auf Winkelverzüge durch Schweißspannungen bedingt, bei dem aber an die Genauigkeit des Eingriffes besonders hohe Anforderungen gestellt werden.

Derartige drehfeste Verbindungen zwischen Welle und Nabe oder zwischen einer Nabe und einem Zahnrad werden üblicherweise durch bloßes Aufpressen oder Aufschrumpfen hergestellt, bei besonders hohen und wechselnden Kräften, wie sie unter anderem etwa am Tellerrad im Achsantrieb eines Kraftfahrzeuges auftreten, durch hochfeste Passschrauben. Die Verbindung mittels Passschrauben ist aber kostspielig und erfordert erheblichen Bauraum. Auch Schweißverbindungen sind denkbar, wegen des Schweißverzuges bei Vorhandensein von Funktionsflächen hoher Genauigkeit aber zu vermeiden.

Aus der GB 1391026 ist die Verbindung eines Radkörpers mit einem Zahnkranz zu Zwecken der Reparatur durch einen leichten Presssitz mit anschließender Schweißung bekannt. Dabei ist die Schweißnaht in radialer Richtung sehr dünn, sodass beinahe kein thermischer Verzug entsteht. Diese Methode ist für die Verbindung eines ganzen Zahnrades mit größerer radialer Erstreckung ungeeignet, und besonders ungeeignet für ein fertig bearbeitetes Zahnrad hoher Präzision.

Hier setzt die Erfindung an. Es soll ein Verfahren entwickelt werden, Zahnräder hoher Präzision durch Schweißen seriensicher zu verbinden. Erfindungsgemäß sind die zu verbindenden Teile in ihrem die Drehachse enthaltenden Längsschnitt so bemessen, dass beim Aufpressen oder Aufschrumpfen im Zahnrad Spannungen und durch diese Verformungen entstehen, die den beim darauffolgenden Schweißen zu erwartenden Spannungen und den durch diese verursachten Verformungen entgegengesetzt sind.

Es ist also dem Verschweißen ein Fügevorgang vorgeordnet. Die Fügeverbindung ist bewusst so ausgelegt, dass sich der zu montierende Teil verformt, und zwar in Richtung und Betrag entgegengesetzt der Verformung durch den Schweißverzug, der sich nach dem Schweißen einstellt. Die Auslegung der Fügeverbindung kann nach bekannten Methoden, insbesondere unter Verwendung einer FE-Methode (FE = Finite Elemente). Aufpressen und Aufschrumpfen ist insoferne gleichwertig, als bei beiden Verbindungen in den Kontaktflächen Spannungen erzeugt werden, im ersten Fall durch elastische Verformung, im zweiten durch Wärmedehnung.

Für die Auslegung der Fügeverbindung und die Bemessung der zu verbindenden Bauteile gibt es zwei Wege, die jeder für sich oder gemeinsam gangbar sind. Der erste Weg besteht darin, dass:
■ Das Zahnrad auf den Nabenteil aufgepresst oder aufgeschrumpft wird, wobei mindestens eine der beiden Kontaktflächen entlang der Achsenrichtung unterschiedliche Radien hat, dergestalt, dass im rotationssymmetrischen Teil beim Aufbringen auf einer Seite höhere Spannungen als auf der anderen Seite entstehen und die Wälzflächen sich in einer Richtung verlagern, und
■ Sodann die Schweißung auf der einen Seite erfolgt, wobei durch die Schweißung auf dieser einen Seite die Wälzflächen wieder in die ursprüngliche genaue Position zurückkehren.

Aus Toleranz- und Kostengründen ist es vorteilhaft, wenn eine der miteinander zu verbindenden Kontaktflächen zylindrisch ist und nur die andere in Achsenrichtung unterschiedliche Radien hat (Anspruch 3), wobei bei unterschiedlichen Radien der äusseren Kontaktfläche der kleinere bzw bei unterschiedlichen Radien der inneren Kontaktfläche der größere Radius auf der Seite der Schweißnaht ist (Anspruch 4).

Die unterschiedlichen Radien lassen sich durch Abstufung fertigen, was einfacher ist, aber einen unstetigen Spannungsverlauf über die axiale Länge erwarten lässt. Besser ist es, wenn die andere der Kontaktflächen konisch ist, wobei bei konischer äusserer Kontaktfläche der kleinere bzw bei konischer innerer Kontaktfläche der größere Radius des Konus auf der Seite der Schweißnaht ist (Anspruch 5).

Der zweite Weg, die Erfindung in die Tat umzusetzen besteht gemäß Anspruch 6 darin, dass:
■ der die Drehachse enthaltende Längsschnitt des Zahnrades zwischen der Kontaktfläche und der Wälzfläche eine Einschnürung aufweist, die zum Flächenmittelpunkt der außerhalb der Einschnürung liegenden Schnittfläche in Axialrichtung versetzt ist, sodass sich die Wälzflächen des Zahnrades beim Aufpressen oder Aufschrumpfen in einer Richtung verlagern,
■ Sodann die Schweißung erfolgt, wodurch die Wälzflächen wieder in die ursprüngliche genaue Position zurückkehren.

Dieser Weg ist zwar der elegantere, weil er keine konischen oder abgestuften Kontaktflächen erfordert. Er ist aber nicht bei allen Grundformen und Belastungszuständen gangbar. Insbesondere ist die Resultierende aus den über die Einschnürung übertragenen Kräften zum Flächenmittelpunkt der außerhalb der Einschnürung liegenden Schnittfläche in Axialrichtung versetzt (Anspruch 7). Besonders vorteilhaft ist das, wenn es sich bei dem so hergestellten Produkt um ein Tellerrad handelt, weil es aufgrund seiner Form zu großen Winkeländerungen durch Schweißverzug kommen kann und auch eine Einschnürung konstruktiv gut unterzubringen ist.

Da die Erfindung einen Weg weist, Schweißverzüge nicht zu unterbinden, sondern zu kompensieren, ist sie im Prinzip für die meisten Schweißverfahren geeignet. Naturgemäß werden besonders gute Resultate erzielt, wenn die Schweißung mittels eines Hochenergiestrahles, insbesondere eines Laserstrahles, erfolgt.

Im Folgenden wird die Erfindung anhand von Abbildungen beschrieben und erläutert. Es stellen dar:
- Fig. 1:: Eine Verbindung nach dem Stand der Technik, erste Phase,
- Fig. 2:: Wie Fig. 1 zweite Phase,
- Fig. 3:: Wie Fig. 1 dritte Phase,
- Fig. 4:: Eine erste Ausführungsform der erfindungsgemäßen Verbin- dung, erste Phase,
- Fig. 5:: Wie Fig. 4, zweite Phase,
- Fig. 6:: Wie Fig. 4, dritte Phase,
- Fig. 7:: Eine zweite Ausführungsform der erfindungsgemäßen Ver- bindung, erste Phase,
- Fig. 8:: Wie Fig. 7, zweite Phase,
- Fig. 9:: Wie Fig. 7, dritte Phase,
- Fig. 10:: Eine Variante der ersten Ausführungsform, .
- Fig. 11:: Schema des Spannungsverlaufes zu den Fig. 4,5 und 6,
- Fig. 12:: Die entsprechenden Toleranzfelder.

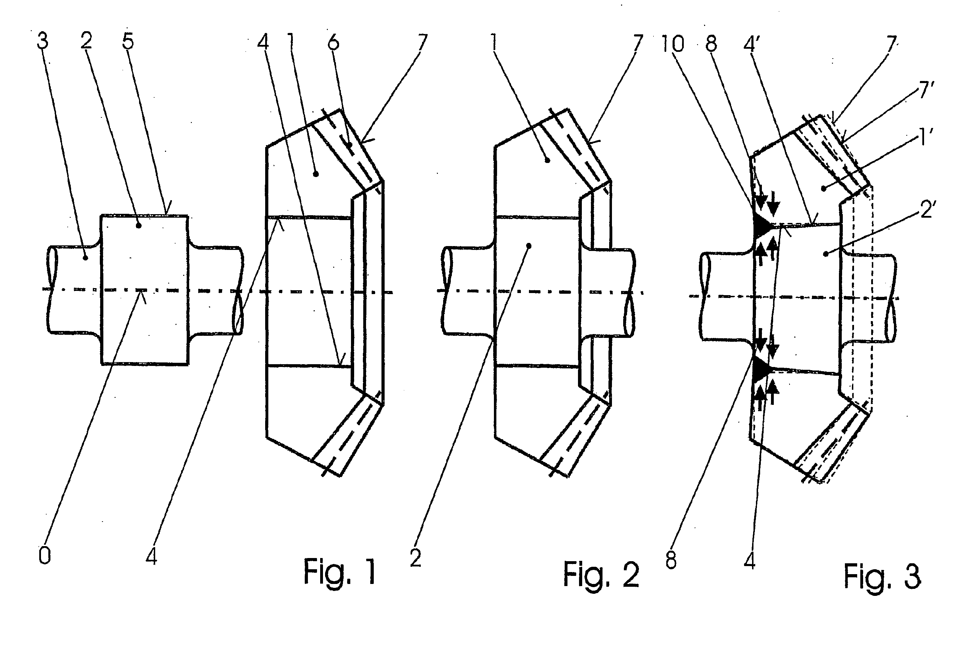

Fig.1 zeigt ein Zahnrad 1 und einen Nabenteil 2 vor ihrer Verbindung. Das Zahnrad 1 ist hier das Tellerrad eines Achsantriebes, das mit einem nicht dargestellten Triebling kämmt. Seine Zahnflanken 6 sind die-Wälzflächen, deren Genauigkeit für den Betrieb sehr wichtig ist. Mit 7 ist der Kopfkegel dieser Zähne bezeichnet, seine Lage wird im Folgenden, auch stellvertretend für alle anderen funktionswesentlichen Maße der Wälzflächen betrachtet. Auf seinem kleinsten Durchmesser hat das Zahnrad 1 eine zylindrische Kontaktfläche 4. Der Nabenteil 2, hier einstückig mit einer Welle 3, hat eine äußere Kontaktfläche 5, welche gemäß dem Stand der Technik ebenfalls zylindrisch ist. Die Toleranzfelder der Kontaktflächen 4,5 sind entsprechend einem leichten Presssitz gewählt. Die Drehachse der beiden zu verbindenden Teile ist mit 0 bezeichnet.

In **Fig. 2** ist der Presssitz zwischen den beiden Teilen 1,2 hergestellt. Die Lage des Kopfkegels 7 ist unverändert geblieben, wenn der über die axiale Länge ungefähr gleiche vom Presssitz ausgeübte Druck zu keiner Verformung des Zahnrades 1 geführt hat.

**Fig. 3** zeigt das Zahnrad 1 und den Nabenteil 2' nach vollendeter Schweißung. Die abgekühlte Schweißnaht 10 übt durch ihr Schrumpfen auf die beiden Teile 1',2' durch die Pfeile 8 angedeutete Schrumpfkräfte aus, die zu einer Formänderung des Zahnrades 1' führen. Diese ist durch Vergleich der strichliert gezeichneten Konturen 7,4 mit den in Volllinie gezeichneten Konturen 7',4' erkennbar. Der Kopfkegel 7 ist zum Kopfkegel 7' geworden. Diese Winkelabweichung wirkt sich sehr nachteilig auf das Zusammenwirken zwischen Tellerrad und Triebling aus. Soweit der Stand der Technik.

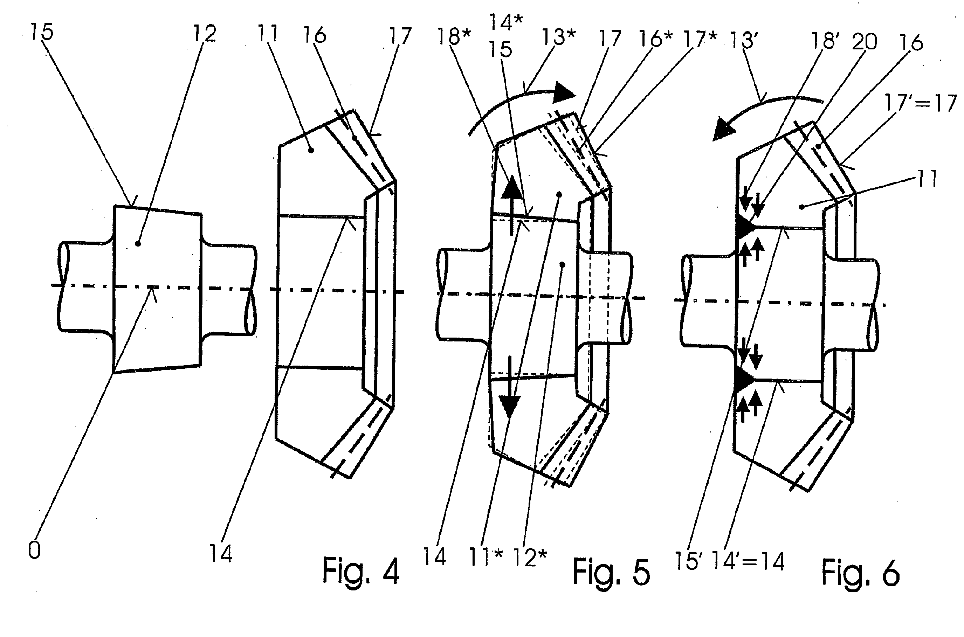

In **Fig. 4** hat das Zahnrad 11 wieder eine Kontaktfläche 14 und Wälzflächen 16 mit dem Kopfkegel 17, ist also gegenüber dem der Fig. 1 unverändert. Die Kontaktfläche 15 des Nabenteiles 12 jedoch ist konisch. Die Konizität ist zum Erreichen der erfindungsgemäßen Wirkung optimiert, was durch Versuch und Faustregel erfolgen kann, besonders genau aber durch Berechnung nach der Methode der finiten Elemente. Der Nabenteil 12 wird in das Zahnrad 11 eingepresst.

**Fig. 5** zeigt die so vereinigten Teile 11,12 nach dem Aufpressen beziehungsweise Einpressen. Durch das Einpressen hat sich das Zahnrad 11 (in Fig. 5 nur mehr strichliert gezeichnet) zu 11 * verformt. Seine Kontaktfläche 14 (strichliert) ist zur leicht konischen Kontaktfläche 14* verformt, sein Kopfkegel 17 (strichliert) zum Kopfkegel 17* (Volllinie). Zurückzuführen ist diese Verformung auf die durch die Pfeile 18* angedeuteten einseitig radial nach außen wirkenden Kräfte durch das Einpressen. Diese Kräfte sind naturgemäß auf der Seite des größten Durchmessers der Kontaktfläche 15 am größten, weshalb der Pfeil 18* auch an dieser Seite ist. Durch die einseitig eingetragene Kraft entsteht eine durch den Pfeil 13 angedeutete Winkelabweichung des Kopfkegels 17 zu 17*.

**Fig. 6** zeigt das nächste Stadium, nach dem Schweißen. Die beim Abkühlen schrumpfende Schweißnaht 20 übt auf den rotationssymmetrischen Teil 11 durch die Pfeile 18 angedeutete Zugkräfte 18 aus. Da diese wieder nur auf der Seite der Schweißnaht 20 wirken, aber in entgegengesetzter Richtung, verursachen sie eine Winkelrückstellung 13'. Diese führt dazu, dass der Kopfkegel aus der Stellung 17* der Fig. 5 in die Stellung 17' gezogen wird. Bei richtiger Auslegung der Presspassung ist die Winkelrückstellung 13' gleich der Winkelabweichung 13* der Fig. 5 und der Kopfkegel 17' ist wieder deckungsgleich mit dem ursprünglichen Kopfkegel 17. Die erfindungsgemäße Verbindung hat somit trotz einseitigen Schweißens zu keiner Verlagerung der hochgenauen Wälzflächen geführt.

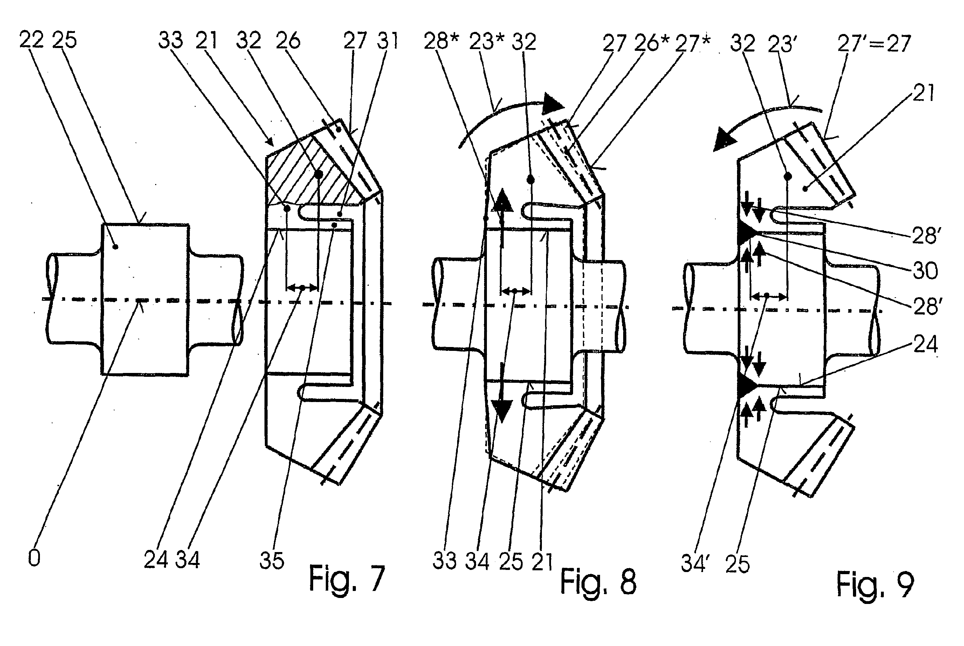

Die Erfindung ist aber auch auf anderem Wege realisierbar, wie in den Figuren 7, 8 und 9 gezeigt. In **Fig. 7** hat der Nabenteil 22 eine zylindrische Kontaktfläche 25. Auch das Zahnrad 21 hat eine zylindrische Kontaktfläche 24, wobei die Toleranzfelder der Durchmesser der beiden Kontaktflächen 24, 25 wieder für einen Presssitz festgelegt sind. Die erfindungsgemäße Wirkung wird hier dadurch erzielt, dass das Zahnrad 21 eine rundum verlaufende Nut 31 aufweist, die im gezeigten Längsschnitt eine Einschnürung 33 zwischen dem Hauptquerschnitt mit einem Flächenmittelpunkt 32 und einem Muffenteil 35 bildet. Auf die Bestimmung des Flächenmittelpunktes 32 wird nicht weiter eingegangen, da diese nach den Regeln der Statik erfolgt. Jedenfalls ist die Einschnürung 33 gegenüber dem Flächenmittelpunkt 32 in Richtung der Achse 0 um einen mit 34 bezeichneten Abstand versetzt. Diese Versetzung ist wesentlich. Innerhalb der Nut 31 bleibt der Muffenteil 35, der über seine gesamte axiale Länge am Presssitz teilnimmt.

**Fig. 8** zeigt die Anordnung der Fig. 7 nach dem Einpressen des Nabenteiles 22 in das Zahnrad 21. Der dabei entwickelte nach außen wirkende Druck zwischen beiden Kontaktflächen 24,25 wird nur im Bereich der Einschnürung 33 in den Hauptquerschnitt des rotationssymmetrischen Teiles 21 eingetragen. Dadurch entsteht wieder eine Winkelabweichung 23*, die eine Verlagerung des Kopfkegels 27 (strichliert) in die Lage 27* (Volllinie) verursacht. Diese nach außen geleitete Kraft ist mit dem Pfeil 28* angedeutet. Eine Schweißnahtvorbereitung ist hier bewusst nicht eingetragen, da diese entsprechend dem jeweilig gewählten Schweißverfahren festgelegt wird. Nun werden die beiden Teile 21,22 verschweißt, beispielsweise mittels eines Hochenergiestrahles, insbesondere mittels Laser.

**Fig. 9** zeigt die verbundenen Teile der nach Schweißung und Abkühlung. Die Schweißung 30 wurde von der Seite vorgenommen, auf der sich auch die Einschnürung 33 befindet. Die erkaltete Schweißnaht übt wieder eine mit den Pfeilen 28' angedeutete Zugkraft auf den Hauptquerschnitt mit dem Flächenmittelpunkt 32 des rotationssymmetrischen Teiles 21 aus, welche wieder in Achsenrichtung gegenüber dem Flächenmittelpunkt 32 um einen Abstand 34' versetzt ist. Die dadurch bewirkte Winkelrückstellung, Pfeil 23', führt den Kopfkegel 27* und die dazugehörigen Wälzflächen zurück in die Lage 27', welche bei richtiger Auslegung wieder gleich der ursprünglichen Lage 27 ist.

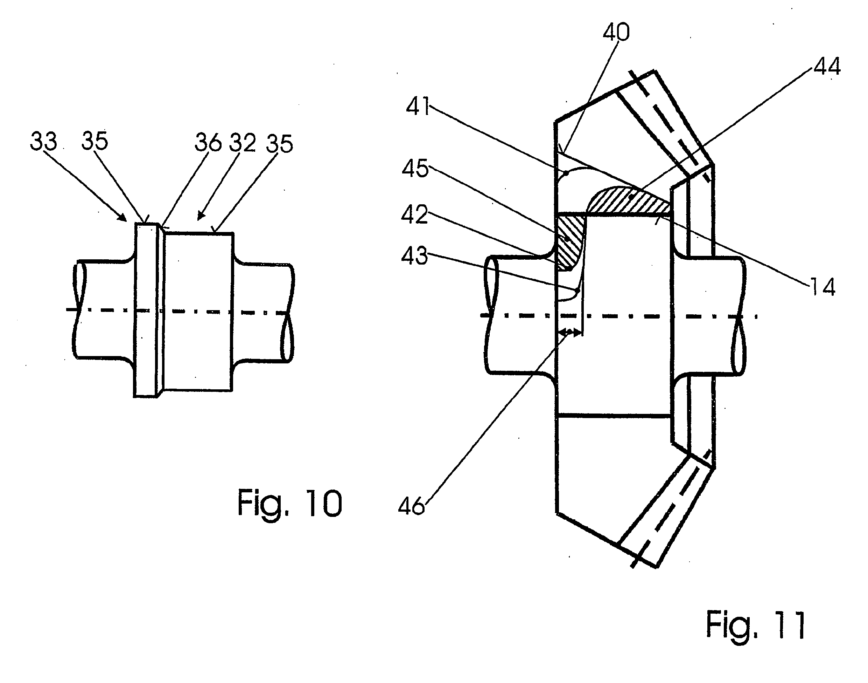

In der Variante der Fig. 10 ist die Kontaktfläche 33 des Nabenteiles 32 nicht konisch wie in Fig. 4, sondern sie besteht aus zwei (oder mehreren) abgestuften zylindrischen Flächen 34,35 verschiedenen Durchmessers, getrennt durch eine konische Anphasung 36.

**Fig. 11** zeigt den Spannungsverlauf in den Kontaktflächen 14,15 bei der Anordnung der Fig. 4. Dort gelte die Spur der Kontaktfläche 14 als Null-Achse von der aus die örtlichen Spannungen nach oben positiv, nach unten negativ eingetragen sind. Die Kurve 40 stellt den Spannungsverlauf nach dem Einpressen des Nabenteiles dar und ist ungefähr eine Gerade; die Kurve 41 die Spannungsverteilung während des Schweißens, also bei maximaler Temperatur; und die Kurve 42 die beim Abkühlen der Schweiße entstehende Schrumpfspannung. Die Kurve 43 ist dann die resultierende aus den Kurven 41 und 42, die Flächen 44 und 45, jeweils schraffiert, sind gleich. Mit 46 ist die Tiefe der nicht eingezeichneten Schweißnaht bezeichnet.

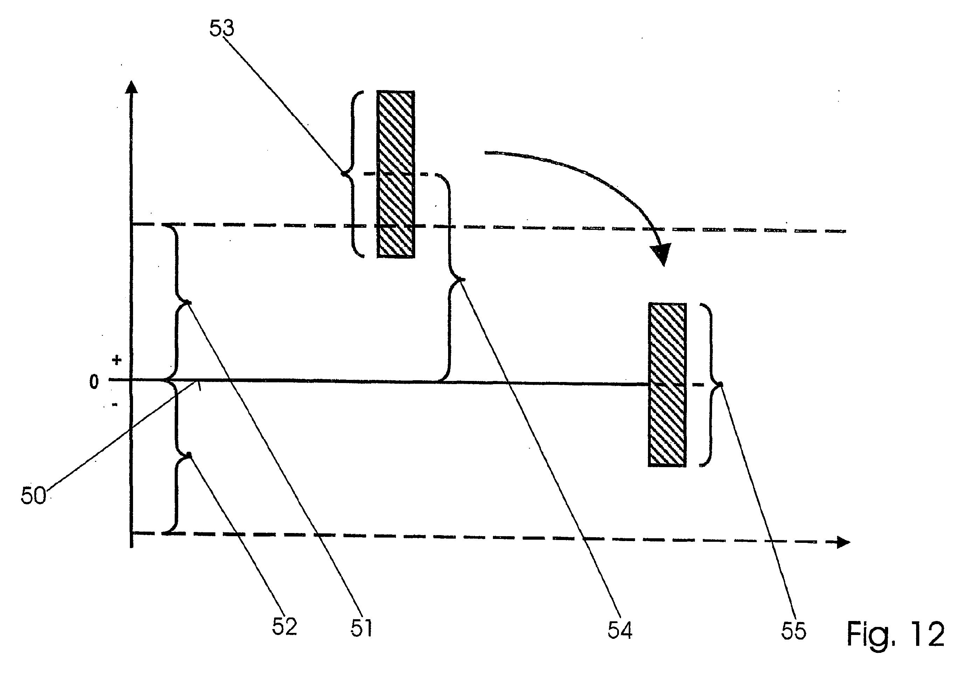

**Fig. 12** zeigt die mit dem erfindungsgemäßen Verfahren praktisch erreichten Auswirkungen. Die horizontale Achse 50 ist eine Zeitachse ohne Maßstab, von dieser sind nach oben die positiven und nach unten die negativen Abweichungen eingezeichnet. Mit den Klammern 51,52 abgegrenzte Bereiche sind die Bereiche der zulässigen positiven bzw. negativen Winkelabweichung. In diesem Bereich sollen die Ist-Maße des fertigen Werkstückes liegen. Durch eine Schweißung nach dem Stand der Technik jedoch, entsteht eine Winkelabweichung, die ein mit der Klammer 53 bezeichnetes zu positiver Winkelabweichung verschobenes Toleranzfeld ergibt. Man sieht, dass nur mehr ein kleiner Teil innerhalb des Bereiches der zulässigen Winkelabweichung liegt. Sein Mittelwert liegt um den Abstand 54 über der Null-Achse der Toleranzfelder. Dem wird durch die erfindungsgemäßen Maßnahmen abgeholfen, diese führen das Toleranzfeld 53 bei richtiger Auslegung zurück in den Bereich 55 der genau symmetrisch zur Null-Achse des Soll-Toleranzfeldes liegt.

## Patentansprüche

1. Verfahren zum Verbinden eines fertig bearbeiteten Zahnrades mit einem Nabenteil durch Schweißen, wobei die miteinander zu verbindenden Kontaktflächen (4; 5; 14; 15; 24; 25; 34; 35) im Wesentlichen zylindrisch sind und das Zahnrad Wälzflächen (6; 16; 26; 36) hat, deren genaue Lage und/oder Winkel funktionswesentlich ist, **dadurch gekennzeichnet, dass** das Zahnrad (11; 21; 31) und der Nabenteil (12; 22; 32) in ihren die Drehachse (0) enthaltenden Längsschnitten so bemessen sind, dass beim Aufschrumpfen oder Aufpressen des Zahnrades (11; 21; 31) in diesem Spannungen und durch diese Verformungen entstehen, die den beim darauffolgenden Schweißen zu erwartenden Spannungen und durch diese verursachten Verformungen entgegengesetzt sind.

2. Verfahren nach Anspruch 1, **dadurch gekennzeichnet, dass**
a) Das Zahnrad (11; 31) auf den Nabenteil (12; 32) aufgebracht wird, wobei mindestens eine der beiden Kontaktflächen (14; 15; 24; 25) entlang der Achsenrichtung (0) unterschiedliche Radien hat, dergestalt, dass im Zahnrad (11; 21) beim Aufbringen auf einer Seite höhere Spannungen als auf der anderen Seite entstehen und die Wälzflächen (16; 36) sich in einer Richtung verlagern (16*; 36*),
b) Sodann die Schweißnaht (20) an der einen Seite angebracht wird, wobei durch die Schweißung auf dieser einen Seite die Wälzflächen (16*; 36*) wieder in die ursprüngliche genaue Position (16; 36) zurückkehren.

3. Verfahren nach Anspruch 2, **dadurch gekennzeichnet, dass** eine der miteinander zu verbindenden Kontaktflächen (14, 15; 24, 25) zylindrisch ist und nur die andere Kontaktfläche in Achsenrichtung unterschiedliche Radien hat.

4. Verfahren nach Anspruch 3, **dadurch gekennzeichnet, dass** bei unterschiedlichen Radien der äußeren Kontaktfläche (14;24) der kleinere beziehungsweise bei unterschiedlichen Radien der inneren Kontaktfläche (15; 25) der größere Radius auf der Seite der Schweißnaht (20) ist.

5. Verfahren nach Anspruch 3, **dadurch gekennzeichnet, dass** die andere der Kontaktflächen (14; 15) konisch ist, wobei bei konischer äußerer Kontaktfläche der kleinere beziehungsweise bei konischer innerer Kontaktfläche (15) der größere Radius des Konus auf der Seite der Schweißnaht (20) ist.

6. Verfahren nach Anspruch 1, **dadurch gekennzeichnet, dass**
a) der die Drehachse (0) enthaltende Längsschnitt des Zahnrades (21) zwischen der Kontaktfläche (24) und der Wälzfläche (26) eine Einschnürung (33) aufweist, die zum Flächenmittelpunkt (32) der außerhalb der Einschnürung (33) liegenden Schnittfläche in Axialrichtung versetzt ist (34), sodass sich die Funktionsfläche (26) des Zahnrades (21) beim Aufpressen oder Aufschrumpfen in einer Richtung verlagert (26*),
b) Sodann die Schweißnaht (30) angebracht wird, wodurch die Wälzfläche (26*) wieder in die ursprüngliche genaue Position (26) zurückkehrt.

7. Verfahren nach Anspruch 1, **dadurch gekennzeichnet, dass** die Resultierende (28*) aus den über die Einschnürung (33) übertragenen Kräften zum Flächenmittelpunkt (32) der außerhalb der Einschnürung (33) liegenden Schnittfläche in Axialrichtung versetzt ist (34).

## Claims

1. Method of connecting a finished gear to a hub part by welding, the contact surfaces (4; 5; 14; 15; 24; 25; 34; 35) to be connected to one another being essentially cylindrical and the gear having rolling surfaces (6; 16; 26; 36), the accurate position and/or angle of which is essential to the function, **characterized in that** the gear (11; 21; 31) and the hub part (12; 22; 32), in their longitudinal sections containing the rotation axis (0), are dimensioned in such a way that, when the gear (11; 21; 31) is shrunk on or pressed on, stresses are produced therein and said stresses produce deformations which are opposed to the stresses to be expected during the subsequent welding and to deformations caused by said stresses.

2. Method according to Claim 1, **characterized in that**
a) the gear (11; 31) is put onto the hub part (12; 32), at least one of the two contact surfaces (14; 15; 24; 25) having different radii along the axial direction (0) in such a way that, when the gear (11; 21) is put on, stresses are produced therein which are higher on the one side than on the other side, and the rolling surfaces (16; 36) are displaced in one direction (16*; 36*),
b) the weld (20) is then provided on the one side, the rolling surfaces (16*; 36*) returning again into the original accurate position (16; 36) on said one side due to the welding.

3. Method according to Claim 2, **characterized in that** one of the contact surfaces (14, 15; 24, 25) to be connected to one another is cylindrical and only the other contact surface has different radii in the axial direction.

4. Method according to Claim 3, **characterized in that** the smaller radius is on the side of the weld (20) in the case of different radii of the outer contact surface (14; 24) or the larger radius is on the side of the weld (20) in the case of different radii of the inner contact surface (15; 25).

5. Method according to Claim 3, **characterized in that** the other of the contact surfaces (14; 15) is conical, the smaller radius of the cone being on the side of the weld (20) in the case of a conical outer contact surface or the larger radius of the cone being on the side of the weld (20) in the case of a conical inner contact surface (15).

6. Method according to Claim 1, **characterized in that**
a) the longitudinal section, containing the rotation axis (0), of the gear (21), between the contact surface (24) and the rolling surface (26), has a constriction (33) which is offset axially (34) relative to the area center (32) of the sectional plane lying outside the constriction (33), so that the functional surface (26) of the gear (21) is displaced in one direction (26*) when being pressed on or shrunk on,
b) the weld (30) is then provided, as a result of which the rolling surface (26*) returns again into the original accurate position (26).

7. Method according to Claim 1, **characterized in that** the resultant (28*) of the forces transmitted via the constriction (33) is offset axially (34) relative to the area center (32) of the sectional plane lying outside the constriction (33).

## Revendications

1. Procédé de jonction par soudage d'une roue dentée déjà usinée avec une partie de moyeu, les surfaces de contact (4 ; 5 ; 14 ; 15 ; 24 ; 25 ; 34 ; 35) à joindre l'une à l'autre étant pour l'essentiel cylindriques et la roue dentée étant dotée de surfaces de roulement (6 ; 16 ; 26 ; 36) dont l'exactitude de la position et/ou de l'angle sont essentielles sur le plan fonctionnel, **caractérisé en ce que** la roue dentée (11 ; 21 ; 31) et la partie de moyeu (12 ; 22 ; 32) sont mesurées de telle sorte dans leurs sections longitudinales comprenant l'axe de rotation (0) qu'en cas de rétractation ou de compression de la roue dentée (11 ; 21 ; 31), des tensions naissent dans celle-ci, ce qui engendre des déformations opposées aux déformations attendues lors du soudage ultérieur et aux déformations provoquées par celui-ci.

2. Procédé selon la revendication 1, **caractérisé en ce que** :
a) la roue dentée (11 ; 31) est apposée sur la partie de moyeu (12 ; 32), au moins une des deux surfaces de contact (14 ; 15 ; 24 ; 25) ayant des rayons différents le long de la direction axiale (0) de telle sorte que lors de l'apposition sur la roue dentée (11 ; 21), des tensions s'exercent plus fortement sur un côté que sur l'autre côté et les surfaces de roulement (16 ; 36) se déplaçant dans une direction (16* ; 36*) ;
b) le cordon de soudure (20) est ensuite appliqué sur le premier côté, la soudure réalisée de ce côté amenant les surfaces de roulement (16* ; 36*) à revenir dans la position (16 ; 36) exacte d'origine.

3. Procédé selon la revendication 2, **caractérisé en ce qu'**une des surfaces de contact (14, 15 ; 24, 25) à joindre entre elles est cylindrique et que seule l'autre surface de contact présente des rayons différents dans la direction axiale.

4. Procédé selon la revendication 3, **caractérisé en ce qu'**en présence de rayons différents de la surface de contact (14 ; 24) extérieure, le plus petit rayon des différents rayons est la surface de contact (15 ; 25) intérieure et le plus grand rayon se situe du côté du cordon de soudure (20).

5. Procédé selon la revendication 3, **caractérisé en ce que** l'autre surface de contact (14 ; 15) est conique, le plus petit rayon étant situé sur le côté du cordon de soudure (20) en présence d'une surface de contact extérieure conique tandis que le plus grand rayon du cône est situé sur le côté du cordon de soudure en présence d'une surface de contact (15) intérieure conique.

6. Procédé selon la revendication 1, **caractérisé en ce que** :
a) la section longitudinale de la roue dentée (21) comprenant l'axe de rotation (0) comporte une gorge (33) entre la surface de contact (24) et la surface de roulement (26), ladite gorge étant décalée (34) dans la direction axiale par rapport au point central de la surface (32) de la surface de section située à l'extérieur de la gorge (33), de sorte que la surface fonctionnelle (26) de la roue dentée (21) n'est déplacée dans une direction (26*) qu'en cas de rétractation ou de compression ;
b) le cordon de soudure (30) est ensuite appliqué, ce qui ramène la surface de roulement (26*) dans la position (26) exacte d'origine.

7. Procédé selon la revendication 1, **caractérisé en ce que** l'extrémité résultante (28*) est décalée (34) dans la direction axiale à partir des forces transmises via la gorge (33) jusqu'au point central de la surface (32) de la surface en coupe reposant à l'extérieur de la gorge (33).
